# FASCICULE DE BREVET EUROPEEN

(11) **EP 2 172 662 B1**
(45) Date de publication et mention de la délivrance du brevet: **07.12.2011**
(21) Numéro de dépôt: 09305928.5
(22) Date de dépôt: 01.10.2009
(51) Int. Cl.: F16C 1/26, F16B 21/18, F16H 61/36, B60K 20/00

(54) **Ensemble de connexion d'un embout recevant un cable dans une ouverture que présente une platine support**
Anordnung zur Befestigung eines ein Kabel aufnehmenden Endstücks in einer Öffnung einer Trägerplatte
Assembly for fixing a cable holder in an opening made in a support plate

(30) Priorité: 02.10.2008 FR 0856692
(43) Date de publication de la demande: 07.04.2010
(73) Titulaire: Dura Automotive Systems SAS, 91570 Bièvres (FR)
(72) Inventeur: Maitre, Sébastien, 43120 Monistrol sur Loire (FR); Serrecchia, Gérard, 42290 Sorbiers (FR); Biaggini, Jean-Marie, 78640 Neauphle le Vieux (FR)
(74) Mandataire: Thivillier, Patrick

(56) Documents cités:
- FR-A- 2 343 156
- FR-A- 2 450 373
- FR-A- 2 590 634
- FR-A- 2 695 693

## Description

L'invention se rattache au secteur technique des équipements pour véhicules automobiles.

Plus particulièrement l'invention concerne la fixation de câbles ou autres sur une platine support montée au niveau d'une boîte de vitesses, mécanique notamment Les câbles ou autres peuvent être affectés, par exemple, à la sélection et/ou au passage des vitesses à partir d'un levier de commande.

D'une manière connue, le câble présente, généralement, une douille ou un embout de connexion destiné à être fixé dans une platine support montée au niveau de la boîte de vitesses.

Dans une forme de réalisation, la douille présente une bague montée avec capacité de coulissement coaxial limitée à l'encontre d'un ressort de rappel. Ainsi, la bague peut être escamotée par rapport à une gorge que présente la douille en vue d'être engagée dans une échancrure formée au niveau de la platine support. Le blocage en position de la douille, dans le fond de l'échancrure, s'effectue par un bossage semi-circulaire formé de manière concentrique, au fond de l'échancrure qui est arrondie. Ces dispositions permettent d'assurer la fixation de la douille après son introduction dans l'échancrure, par un effet de clipage.

Des solutions de ce type ressortent, par exemple, de l'enseignement des brevets US 6,295,889 et US 5,579,162.

Dans tous les cas, il apparaît que le clipage est réalisé en fin de course, c'est-à-dire après avoir totalement engagé la douille dans le fond de l'échancrure. Dans ces conditions, on ne peut exclure le fait que le clipage est mal réalisé, en considérant par ailleurs les conditions dans lesquelles travaille l'opérateur. Généralement, on ne peut pas constater visuellement si le clipage est bien réalisé, le seul moyen de contrôle étant un bruit de claquement qui peut correspondre au clipage. On conçoit qu'un tel contrôle sonore n'est pas toujours évident, eu égard aux bruits environnants sur une chaîne de montage de véhicules automobiles.

Il est également apparu important de pouvoir constater visuellement, qu'en sortie de chaîne, la fixation du câble est bien réalisée ou non. Or, selon les solutions de l'état de la technique telles qu'exposées précédemment, si l'opération de clipage en tant que telle n'est pas correctement réalisée, l'embout de connexion peut malgré tout rester positionné par rapport à la platine support, ce que ne percevra pas l'opérateur chargé d'effectuer le premier essai de passage des vitesses. Dans un tel cas, malgré les apparences, la fixation sure et efficace de l'embout ne sera pas réalisée.

Une autre solution ressort de l'enseignement du brevet français 2.695.693. qui concerne un dispositif d'immobilisation d'une gaine de câble dans un support comportant un alésage traversé par la gaine qui est solidaire d'une douille de guidage. Un organe élastique d'arrêt est monté dans une gaine de la douille, en appui contre une face du support.

Le document FR 2343156 décrit un dispositif de maintien d'une gaine d'un câble de transmission pour un levier de manoeuvre de frein de bicyclette. Le verrouillage s'effectue sous un effort d'introduction coaxial. Ce document divulgue les caractéristiques définies dans le préambule de la revendication 1.

L'invention s'est fixée pour but de remédier aux inconvénients mentionnés ci dessus d'une manière simple, sûre, efficace et rationnelle.

Le problème que se propose de résoudre l'invention est de pouvoir assurer le verrouillage de l'embout ou douille de connexion du câble par rapport à la platine, avec pour objectif que cet embout ou douille, si la connexion n'est pas correctement effectuée, échappe automatiquement la platine support, lors du premier essai de passage des vitesses, l'invention trouvant une application particulièrement avantageuse dans le domaine de l'automobile notamment pour la fixation du câble de commande d'une boîte de vitesses.

Pour résoudre un tel problème, il a été conçu et mis au point un ensemble de connexion d'un embout recevant un câble dans une ouverture que présente une platine support, selon les caractéristiques de la revendication 1.

Compte tenu de ces dispositions, il apparaît que, contrairement à l'enseignement de l'état de la technique dans le domaine de l'automobile, l'introduction de l'embout dans l'ouverture s'effectue de manière coaxiale et non plus d'une manière perpendiculaire à l'axe de l'ouverture ou de l'échancrure. En effet, selon l'état antérieur de la technique, l'opérateur introduit l'embout de connexion dans l'ouverture de la platine, selon un mouvement de haut en bas.

Selon l'invention, compte tenu de la nécessité d'introduire coaxialement l'embout en vue d'assurer la connexion par rapport à la platine, il en résulte que, si l'on exerce un effort de traction sur le câble, à l'opposé du sens de verrouillage, l'embout va échapper la platine, de sorte que la vitesse ne passera pas. Inversement, dans le cas où l'embout n'est pas complètement introduit en position de verrouillage, si l'opérateur tire sur le câble dans le sens correspondant au verrouillage, le clipage sera réalisé automatiquement.

Pour faciliter l'introduction de l'embout dans l'ouverture de la platine, la bague ouverte est chanfreinée, d'une manière correspondante à un chanfrein que présente l'entrée de l'ouverture considérée selon le sens d'introduction de l'embout. L'extrémité de l'embout, à partir de laquelle est engagé ledit embout dans l'ouverture de la platine, est chanfreiné.

Pour résoudre le problème posé d'améliorer le verrouillage, l'entrée de l'ouverture considérée selon le sens d'introduction de l'embout, présente un bossage coopérant en appui avec l'épaulement de l'embout, en position de verrouillage,

Avantageusement, la face d'appui de la bague fendue présente une pente coopérant avec une pente complémentaire de l'ouverture pour rattraper les jeux.

L'invention est exposée ci-après plus en détail à l'aide des figures des dessins annexés dans lesquels :
- la figure 1 est une vue en perspective, avant montage, des principaux éléments de l'embout de connexion selon l'invention;
- la figure 2 est une vue en perspective correspondant à la figure 1 après montage desdits éléments constitutifs de l'embout ;
- la figure 3 est une vue partielle en perspective d'un exemple de réalisation de la platine support avant connexion de l'embout ;
- la figure 4 est une vue en perspective montrant l'introduction de l'embout équipé du câble au niveau de l'ouverture de la platine support;
- la figure 5 est une vue en perspective montrant la platine support dans laquelle est verrouillé l'embout, le câble n'étant pas représenté ;
- les figures 6, 7 et 8 sont des vues en coupe montrant les principales phases pour le verrouillage de l'embout dans l'ouverture de la platine support.

Comme indiqué, l'invention concerne un ensemble de connexion pour la fixation d'un câble (C) dans une platine support (1). Par exemple, la platine (1) est montée sur une partie d'une boîte de vitesses (non représentée). La platine support (1) présente une ouverture (la) pour l'engagement d'un embout de connexion (2) assujetti au câble (C) par tout moyen connu et approprié.

Compte tenu des caractéristiques à la base de l'invention et comme il sera indiqué dans la suite de la description, l'ouverture (la) peut avoir une forme circulaire notamment fermée, ou ouverte selon les figures des dessins, en constituant une échancrure.

L'embout de connexion (2) est conformé pur être engagé coaxialement à l'ouverture (1a). Ainsi, l'extrémité d'introduction (2a) du corps de l'embout est chanfreiné. En outre, le corps de l'embout (2) présente une portée de centrage (2b) coopérant avec l'ouverture (1a) de la platine avec, en amont, une gorge (2c) et, en aval, un épaulement (2d),

Comme il sera indiqué dans la suite de la description, le verrouillage de l'embout (2), dans l'ouverture (1a) de la platine (1), est effectué par l'épaulement (2d), en appui contre l'une des faces de la platine, de part et d'autre de l'ouverture (la), en combinaison avec une bague ouverte (3) montée dans la gorge (2c) du corps de l'embout (2).

Selon l'une des caractéristiques importantes de l'invention, la bague ouverte (3) est montée dans la gorge (2c), en combinaison avec un organe circulaire (4) conformé, par la nature du matériau le constituant et/ou de part sa forme géométrique, pour être déformable élastiquement

La bague ouverte (3) présente une pente d'introduction (3a) chanfreinée, de manière correspondante à un chanfrein (1a1) que présente l'entrée de l'ouverture (1a) considérée selon le sens d'introduction (F) de l'embout (2). Dans la forme de réalisation illustrée, le chanfrein (1a1) de l'ouverture (1a) est réalisé au niveau d'un bossage (1a2) formé concentriquement à l'ouverture (1a) et destiné à coopérer en appui avec l'épaulement (2d) de l'embout (2).

Compte tenu de ces dispositions, la longueur de la portée (2b) de l'embout (2) est égale à l'épaisseur de la platine et du bossage (1a2) considéré au niveau de l'ouverture (1a).

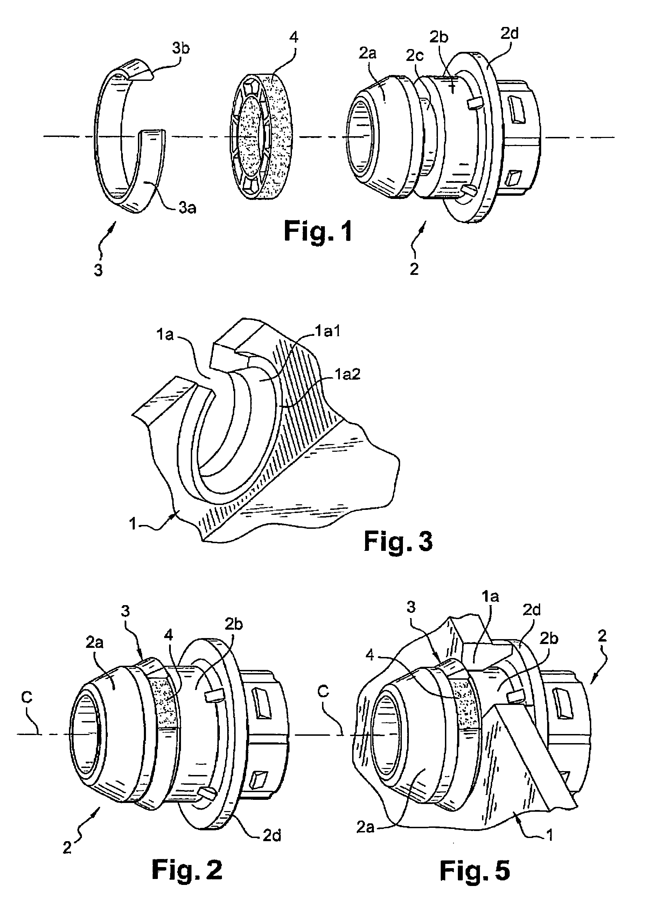

Après mise en place de la bague ouverture (3) dans la gorge (2c) de l'embout (2) préalablement équipé de l'organe élastique (4), le plus grand diamètre de la bague ouverture (3) déborde de la portée (2b) (figure 2).

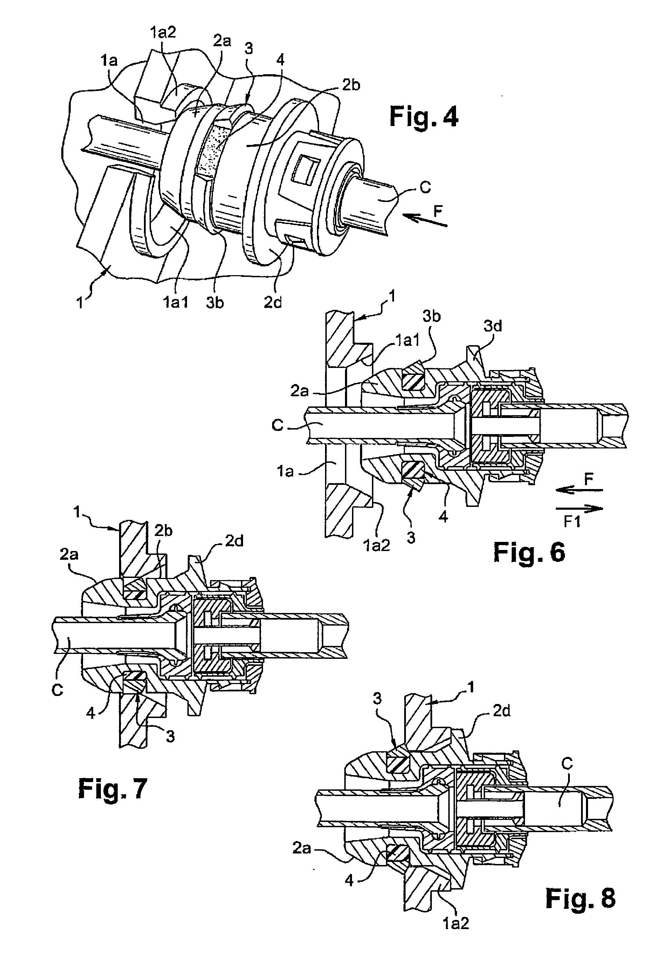

On se réfère aux figures 4, 6, 7 et 8 qui montrent le principe de connexion de l'embout (2) sur la platine support (1).
➢ L'embout (2), équipé du câble (C), est disposé coaxialement à l'ouverture (1a) de la platine support (1) (figures 4 et 6).
➢ Un effort de traction ou de poussée (F) exercé sur le câble (C) ou l'embout (2) permet l'introduction de l'embout (2) dans l'ouverture (1a) de la platine (1) par son extrémité chanfreinée (2a). Lorsque la bague ouverte (3) arrive dans l'ouverture (la), cette dernière est refermée sur elle-même, correspondant à une diminution de son diamètre compte tenu de la déformation élastique de l'organe (4) qui se trouve comprimé (figure 7).
➢ Après avoir échappé l'ouverture, l'organe élastique (4) n'est plus soumis à un effort de compression, de sorte que la bague ouverte (3) peut s'écarter diamétralement correspondant à une position de verrouillage, selon laquelle ladite bague (3) et l'épaulement (2d) sont en butée sur chacune des faces de la platine support (1), de part et d'autre de l'ouverture (1a) (figure 8).

D'une manière avantageuse, afin de gommer les jeux fonctionnels de montage, la face d'appui de la bague fendue (3) présente une pente (3b) coopérant avec une pente complémentaire de l'ouverture (1a) pour rattraper les jeux.

Compte tenu de ces caractéristiques, l'opérateur, situé en bout de chaîne par exemple, peut être certain du bon verrouillage de l'embout de connexion ou non.

En effet, si l'embout est simplement engagé dans l'ouverture (1a) de la platine (1), d'une manière insuffisante, en ce sens que la bague ouverte n'a pas échappé ladite ouverture pour assurer, le verrouillage en tant que tel, deux possibilités peuvent apparaître :
- un effort de traction est exercé sur le câble selon le sens de la flèche F1, de sorte que l'embout va échapper l'ouverture de la platine, ne permettant pas le passage de la vitesse, ce dont s'apercevra immédiatement l'opérateur ;
- inversement si l'effort de traction exercé sur le câble est dirigé selon la flèche F, l'épaulement (2d) vient en appui contre la platine support et la bague (3), après avoir franchi l'ouverture (la), peut s'écarter diamétralement assurant, comme indiqué précédemment, le verrouillage de l'embout (figure 8).

Les avantages ressortent bien de la description.

## Revendications

1. Ensemble de connexion d'un embout (2) recevant un câble (C) dans une ouverture (1a) que présente une platine support (1), l'embout (2) étant équipé d'une bague ouverte (3) montée dans une gorge (2c) et apte à être engagée, sous un effort d'introduction coaxial de l'embout (2), dans l'ouverture (1a), pour permettre l'engagement dudit embout (2) dans l'ouverture suite à une diminution du diamètre de ladite bague (3) et, après le passage dans ladite ouverture, son expansion diamétrale correspondant à une position de verrouillage de l'embout (2) dans l'ouverture (1) en combinaison avec un épaulement (2d) de l'embout (2) qui fait office de butée **caractérisé en ce que** la bague ouverte (3) coopère avec organe circulaire (4) déformable élastiquement et monté dans la gorge (2c) de sorte que lorsque la bague ouverte (3) arrive dans l'ouverture (1), ladite bague est refermée sur elle-même, correspondant à une diminution de son diamètre compte tenu de la déformation élastique de l'organe (4) qui se trouve comprimé puis après avoir échappé l'ouverture, l'organe élastique (4) n'étant plus soumis à un effort de compression, ladite bague ouverte (3) s'écarte diamétralement correspondant à la position de verrouillage, selon laquelle ladite bague (3) et l'épaulement (2d) sont en butée sur chacune des faces de la platine support (1), de part et d'autre de l'ouverture (1a).

2. Ensemble selon la revendication 1, **caractérisé en ce que** la bague ouverte (3) est chanfreinée, d'une manière correspondante à un chanfrein que présente l'entrée de l'ouverture (1a) considérée selon le sens d'introduction de l'embout (2).

3. Ensemble selon l'une quelconque des revendications 1 à 2, **caractérisé en ce que** l'extrémité de l'embout (2), à partir de laquelle est engagé l'embout (2) dans l'ouverture de la platine (1), est chanfreinée.

4. Ensemble selon l'une quelconque des revendications 1 à 3, **caractérisé en ce que** l'entrée de l'ouverture (1a) considérée selon le sens d'introduction de l'embout (2), présente un bossage coopérant en appui avec l'épaulement (2d) de l'embout (2), en position de verrouillage.

5. Ensemble selon l'une quelconque des revendications 1 à 4, **caractérisé en ce que** la face d'appui de la bague fendue (3) présente une pente coopérant avec une pente complémentaire de l'ouverture (1a) pour rattraper les jeux.

6. Utilisation de l'ensemble de connexion selon l'une quelconque des revendications 1 à 5 dans le domaine de l'automobile pour la fixation du câble de commande d'une boite de vitesses.

## Claims

1. Unit for connecting an end fitting (2) accommodating a cable (C) in an opening (1a) provided in a support plate (1), being equipped with an open ring (3) mounted in a groove (2c) and capable of being engaged, under a forced coaxial insertion of the end fitting (2), in the opening (1a), so as to allow said end fitting (2) to engage in the opening subsequent to a reduction in the diameter of said ring (3) and, after entry into said opening, the diametrical expansion thereof corresponding to a locking position of the end fitting (2) in the opening (1a) in combination with a shoulder (2d) of the end fitting (2) which acts as a stop **characterised in that** the open ring (3) engages with a resiliently deformable circular member (4) mounted in the groove (2c) so that when the open ring (3) reaches the opening (1a), said ring is closed upon itself, corresponding to a reduction of its diameter in view of the resilient deformation of the member (4) which is compressed and then after escaping from the opening, the resilient member (4) no longer being subject to a compression stress, said open ring (3) separates diametrically corresponding to the locking position, according to which said ring (3) and the shoulder (2d) are stopped on each of the faces of the support plate (1), on either side of the opening (1a).

2. Unit as claimed in claim 1, **characterised in that** the open ring (3) is bevelled, in a manner corresponding to a bevel provided by the entry of the opening (1a) when considered in the direction of insertion of the end fitting (2).

3. Unit as claimed in any one of claims 1 to 2, **characterised in that** the end of the end fitting (2), starting with which the end fitting (2) is engaged in the opening in the plate (1), is bevelled.

4. Unit as claimed in any one of claims 1 to 3, **characterised in that** the entry of the opening (1a) when considered in the direction of insertion of the end fitting (2), has a projection engaging in support with the shoulder (2d) of the end fitting (2), in the locking position.

5. Unit as claimed in any one of claims 1 to 4, **characterised in that** the bearing surface of the split ring (3) has a slope engaging with a complementary slope of the opening (1a) to adjust for wear.

6. Use of the connection unit as claimed in any one of claims 1 to 5 in the motor vehicle field for securing a gearbox control cable.

## Patentansprüche

1. Anschlusseinheit eines Aufsatzes (2), der in einer Öffnung (1a) einer Trägerplatte (1) ein Kabel (C) aufnimmt, versehen mit einem offenen Ring (3), der in einer Nut (2c) angebracht und geeignet ist, unter einer koaxialen Einführungskraft des Aufsatzes (2) in die Öffnung (1a) geführt zu werden, um nach einer Verringerung des Durchmessers des besagten Rings (3) die Einführung des Aufsatzes (2) in die Öffnung und nach der Durchführung in der besagten Öffnung seine diametrale Ausdehnung zu ermöglichen, die in Verbindung mit einem als Anschlag dienenden Schulterstück (2d) des Aufsatzes (2) einer Verriegelungsposition des Aufsatzes in der Öffnung (1a) entspricht, **dadurch gekennzeichnet, dass** der offene Ring (3) mit einem kreisförmigen Organ (4) zusammenwirkt, das elastisch verformbar und so in der Nut (2c) angebracht ist, dass der besagte Ring, wenn der offene Ring (3) in der Öffnung (1a) ankommt, in sich geschlossen wird, was angesichts der elastischen Verformung des zusammengedrückten Organs (4) einer Verringerung seines Durchmessers entspricht; dann nach dem Verlassen der Öffnung, wenn das elastische Organ (4) keiner Kompressionskraft mehr unterliegt, spreizt sich der besagte offene Ring (3) diametral entsprechend der Verriegelungsposition, wonach der besagte Ring (3) und das Schulterstück (2d) beiderseits der Öffnung (1a) auf jeder Seite der Trägerplatte (1) im Anschlag sind.

2. Baueinheit nach Anspruch 1, **dadurch gekennzeichnet, dass** der offene Ring (3) entsprechend einer Fase des Eingangs der Öffnung (1a) in Einführungsrichtung des Aufsatzes (2) abgefast ist.

3. Baueinheit nach einem der Ansprüche 1 - 2, **dadurch gekennzeichnet, dass** das Ende des Aufsatzes (2), von dem aus der Aufsatz (2) in die Öffnung der Platte (1) eingeführt wird, abgefast ist.

4. Baueinheit nach einem der Ansprüche 1-3, **dadurch gekennzeichnet, dass** der Eingang der Öffnung (1a) in Einführungsrichtung des Aufsatzes (2) eine Erhöhung aufweist, die in Verriegelungsposition mit dem Schulterstück (2d) des Aufsatzes (2) zusammenwirkt.

5. Baueinheit nach einem der Ansprüche 1-4, **dadurch gekennzeichnet, dass** die Auflagefläche des Spaltrings (3) eine Schräge aufweist, die zum Ausgleich der Spiele mit einer komplementären Schräge der Öffnung (1a) zusammenwirkt.

6. Verwendung der Anschlusseinheit nach einem der Ansprüche 1 - 5 im Automobilbereich für die Befestigung des Schaltzugs eines Getriebes.
